# EUROPEAN PATENT APPLICATION

(11) **EP 0 579 944 A1**
(43) Date of publication of application: **26.01.1994**
(21) Application number: 93109431.2
(22) Date of filing: 12.06.1993
(51) Int. Cl.: A23N 7/02

(54) **A peeling roller for a vegetable peeling machine**

(30) Priority: 24.07.1992 SE 9202246
(71) Applicant: LIMAS AB, S-296 21 Ahus (SE)
(72) Inventor: Jönsson, Bo, S-296 38 Ahus (SE)
(74) Representative: Linde, Leif

(57) **Abstract**

A peeling roller for a vegetable peeling machine comprises a cylindrical surface at which cutting elements for example consisting of cutting grits of carborundum are arranged. The cutting elements are arranged within surface portions (2) separated from each other, between which smooth and preferably glossy surface portions (6) of the cylindrical surface of the roller are provided.

## Description

The present invention relates to a peeling roller for a vegetable peeling machine.

In peeling machines for vegetable products, for example potatoes, it is common praxis to use rotatable peeling rollers for the peeling operation. These rollers have a cylindrical surface at which cutting elements, for example consisting of cutting grits of carborundum, are arranged. A previously known type of peeling rollers has a continuous coating of carborundum which can be provided for example by tightly winding the cylindrical roller surface with a strip covered with carborundum. Peeling rollers of this kind can be used in peeling machines for batchwise peeling as well as in peeling machines in which the vegetable products are transported through the peeling machine during the peeling operation.

It is a drawback of the previously known peeling rollers that the rollers have insufficient effeciency when peeling without water because of the fact that the peel residues in the absence of water relatively fast fill up the carborundum coating. Another drawback of the previously known peeling rollers is that the potatoes during the peeling end up in a static condition leading to a discontinuous peeling. In a certain cases it might even happen that potatoes remain positioned between one and the same pair of rollers and are cut to thin slices which fall down between the rollers. Attempts have been made to solve the last mentioned problem i.e. by providing the rollers with longitudinal beads but this solution is from many points of view less satisfying.

The object of the invention is to provide a peeling roller which brings about a more efficient and uniform peeling especially when the peeling is conducted without the supply of water.

In order to comply with this object there is according to the invention provided a peeling roller having a cylindrical surface at which cutting elements for example consisting of grits of carborundum are arranged, the peeling roller being characterized in that the cutting elements are arranged within surface portions which are separated from each other and between which smooth and preferably glossy surface portions of the cylindrical surface of the roller are provided.

This design of the peeling roller provides for a surprising improvement of the characteristics of the roller in respect of the capacity of the roller of self-cleansing from peel residues as well as the capacity of the roller to provide a uniform peeling of the vegetable products by subjecting the vegetable products to increased movements during the peeling operation.

It is preferred that the dividing lines separating the surface portion provided with cutting elements from the smooth and preferably glossy surface portions at least partially form an angle with a plane perpendicular to the rotational axis of the roller.

It is also preferred that the cutting elements of the peeling roller are positioned within surface portions which form winding turns of a strip-shaped surface extending helically around the cylindrical surface of the roller with a distance between the edges of the strip-shaped surface and that the space between these edges form the smooth and preferably glossy surface portions of the cylindrical surface of the roller.

The invention is described in the following with reference to the accompanying drawings.

Fig. 1 is a plan view of a portion of an embodiment of a peeling roller according to the invention.

Fig. 2 is a plan view of a portion of a modified embodiment of a peeling roller according to the invention.

Fig. 3 is a section on line III - III of Fig. 2.

A prior art type of a peeling machine for peeling vegetable products, for example potatoes, comprises a number of peeling rollers rotatable journalled in parallell adjacent each other, the peeling rollers being at their cylindrical surfaces provided with cutting elements, for example consisting of cutting grits of carborundum. In conventional peeling rollers the carborundum grits form a continuous coating on the surfaces of the rollers. By contrast therewith the carborundum coatings on the peeling rollers shown in the drawings are arranged within surface portions which are separated from each other and between which smooth and preferably glossy surface portions of the cylindrical surfaces of the rollers are provided.

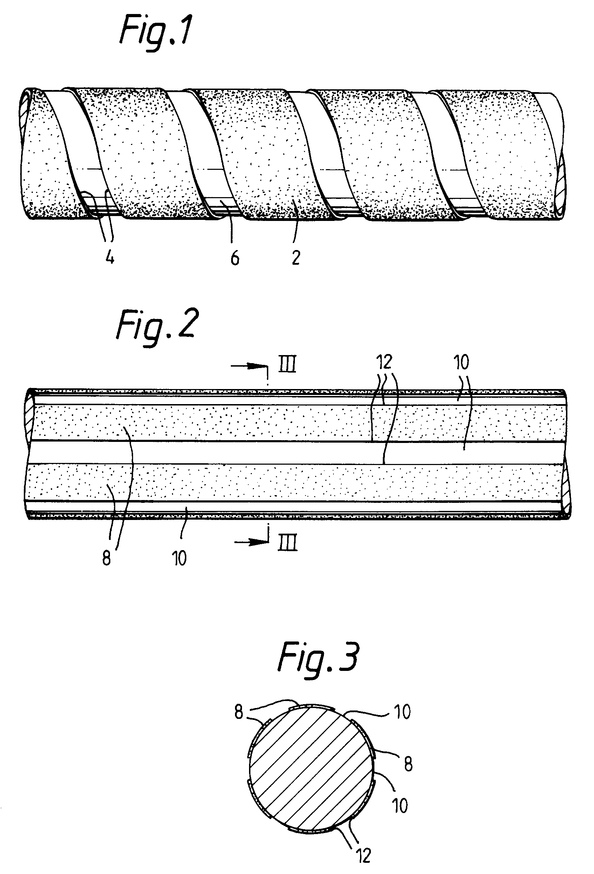

In the peeling roller according to Fig. 1 the carborundum coating extends around the cylindrical surface of the roller as a helically extending strip 2, the edges 4 of the strip-shaped surface being positioned at a distance from each other so that the smooth and preferably glossy surface 6 of the roller is exposed between the edges 4.

A peeling roller according to Fig. 1 can be manufactured in a simple way by winding a roller provided with a smooth, cylindrical surface with a strip coated with carborundum, the pitch of the winding being adjusted so that there is between the edges of the strip established a distance of a suitable width where the smooth surface of the roller is exposed. The width of the smooth and preferably glossy surface portion of the roller between the edges of the strip should be at least 5 mm and is normally about 1 - 2 cm.

The carborundum coated strip is suitably connected with the surface of the roller by means of two component bidning agent.

In Figs. 2 and 3 there is shown a modified embodiment of a peeling roller according to the invention. In this embodiment the surface of the roller is provided with strips 8 coated with carborundum and extending in parallell with each other in the longitudinal direction of the roller while leaving a smooth and glossy surface portion 10 of the cylindrical surface of the roller between the strips 8 coated with carborundum. Also in this embodiment the distances between the edges 12 of the strips coated with carborundum amount to at least 5 mm and preferably 1 - 2 cm.

The peeling rollers according to the invention present substantially improved characteristics with regard to the capacity of providing a uniform and efficient peeling also when the peeling takes place without water. The smooth and preferably glossy surface portions between the surface portions coated with carborundum provide that the rollers are only partially filled up with peel residues. The fact that the lines 4 and 12 between the surface portions 2 and 8 coated with carborundum and the smooth and preferably glossy portions 10 and 8 at least partially form an angle with a plane perpendicular to the rotational axis of the roller also provides that the potatoes are during the peeling operation subjected to impacts which positively contribute to the movements and uniform peeling of the potatoes .
Thus, it may be suitable to provide a peeling machine with different types of peeling rollers, for example peeling rollers having a continuous carborundum coating alternating with peeling rollers having a carborundum strip helically extending in the one winding direction and a carborundum strip helically extending in the other winding direction. Thanks to the opposite windings of the rollers in a peeling machine there is provided a movement of the potatoes backwards and forwards in the container of the peeling machine.

The invention can be modified within the scope of the following claims.

## Claims

1. A peeling roller for a vegetable peeling machine comprising a cylindrical surface at which cutting elements for example consisting of cutting grits of carborundum are arranged, **characterized** in that the cutting elements are arranged within surface portions (2; 8) which are separated from each other and between which smooth and preferably glossy surface portions (6; 10) of the cylindrical surface of the roller are provided.

2. A peeling roller as claimed in claim 1, **characterized** in that the dividing lines (4; 12) between the surface portions (2; 8) provided with cutting elements and the smooth and preferably glossy surface portions (6; 10) at least partially form an angle with a plane extending perpendicular to the rotational axis of the roller.

3. A peeling roller as claimed in claim 2, **characterized** in that the cutting elements are arranged within surface portions (2) forming winding turns of a strip-shaped surface which extends helically around the cylindrical surface of the roller with a distance between the edges (4) of the strip-shaped surface and that the space between said edges forms the smooth and preferably glossy surface portions (6) of the cylindrical surface of the roller.

4. A peeling roller as claimed in claim 1 or 2, **characterized** in that the surface portions (8) provided with the cutting elements extend as strips in the longitudinal direction of the roller and are positioned at a peripheral distance from each other.

5. A peeling roller as claimed in claim 3 or 4, **characterized** in that the distance between the edges (4; 12) of the strip-shaped surface is at least 5 mm.
